(19) Europäisches Patentamt
European Patent Office
Office européen des brevets

(11) Veröffentlichungsnummer : **0 018 949**
**B1**

(12) **EUROPÄISCHE PATENTSCHRIFT**

(45) Veröffentlichungstag der Patentschrift : **11.04.84**

(21) Anmeldenummer : **80810147.1**

(22) Anmeldetag : **01.05.80**

(51) Int. Cl.³ : **C 08 G 59/68**, C 08 G 59/64, C 08 G 59/42, C 07 C 93/04, C 07 C 93/06

(54) **Härtbare Epoxidharzgemische und Härtungsbeschleuniger dafür.**

(30) Priorität : **08.05.79 CH 4307/79**

(43) Veröffentlichungstag der Anmeldung : **12.11.80 Patentblatt 80/23**

(45) Bekanntmachung des Hinweises auf die Patenterteilung : **11.04.84 Patentblatt 84/15**

(84) Benannte Vertragsstaaten : **CH DE FR GB IT LI NL**

(56) Entgegenhaltungen :
**FR-A- 1 324 523**
**FR-A- 2 005 786**
**FR-A- 2 290 466**
**GB-A- 998 853**
**US-A- 3 892 526**
**US-A- 4 134 846**

(73) Patentinhaber : **CIBA-GEIGY AG**
**Postfach**
**CH-4002 Basel (CH)**

(72) Erfinder : **Gutekunst, Ferdinand**
**Oberdorfstrasse 13**
**CH-4125 Riehen (CH)**
Erfinder : **Schmid, Rolf, Dr.**
**Weihermattweg 18**
**CH-4460 Gelterkinden (CH)**

**EP 0 018 949 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Härtbare Epoxidharzgemische und Härtungsbeschleuniger dafür

Die vorliegende Erfindung betrifft härtbare Gemische aus Epoxidverbindungen, die ein Additionsprodukt aus einem Dimethylaminoalkylamin und einen Monoglycidyläther als Härtungsbeschleuniger bei der Härtung von Epoxidharzen mit Polycarbonsäureanhydriden oder mehrwertigen Phenolen enthalten.

Es ist bekannt, bei der Härtung von Epoxidharzen mit Polycarbonsäureanhydriden oder Phenolen den härtbaren Gemischen Härtungsbeschleuniger, wie z. B. tertiäre Amine, zuzusetzen. Wie aus der GB-PS 1,050,678 hervorgeht, bewirken Zusätzen von tertiären Aminen, wie z. B. Benzyldimethylamin, bei der Härtung von Epoxidharzen mit Polycarbonsäureanhydriden eine Verkürzung der Härtungszeit, doch keine Erniedrigung der relativ hohen Härtungstemperaturen. Ausserdem verschlechtern sich die Eigenschaften der gehärteten Epoxidharze, wenn man tertiäre Amine als Beschleuniger zusetzt. Um diesen Nachteilen zu begegnen, wird in der GB-PS 1,050,678 die Verwendung von Imidazolen als Härtungsbeschleuniger für die Anhydridhärtung von Epoxidharzen vorgeschlagen. Imidazole stellen im Vergleich zu anderen bekannten Beschleunigern sehr wirksame Beschleuniger dar, jedoch weisen Imidazole enthaltende Einkomponentensysteme aus Epoxidharzen und Polycarbonsäurenanhydriden, wie Pressmassen oder Sinterpulver, den Nachteil einer ungenügenden Lagerstabilität auf.

Es wurde nun gefunden, dass sich die oben geschilderten Nachteile weitgehend vermeiden lassen, wenn man additionsprodukte aus Dimethylaminoalkylaminen und Glycidyläthern einwertiger aliphatischer Alkohole oder Phenole als Härtungsbeschleuniger für die Härtung von Epoxidharzen mit Polycarbonsäureanhydriden oder mit mehrwertigen Phenolen verwendet.

Gegenstand der vorliegenden Erfindung sind somit härtbare Gemische, die eine Polyepoxidverbindung mit durchschnittlich mehr als einer Epoxidgruppe im Molekül, und eine Di- oder Polycarbonsäure, ein Anhydrid einer Di- oder Polycarbonsäure oder ein mehrwertiges Phenol als Härtungsmittel enthalten, und die dadurch gekennzeichnet sind, dass sie ausserdem eine Verbindung der Formel I enthalten

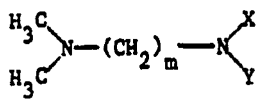

(I)

worin m für eine Zahl von 3 bis 10 steht,

X eine Gruppierung der Formel

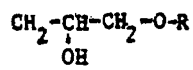

bedeutet, worin

R ein Alkyl mit 4 bis 10 C-Atomen oder ein unsubstituiertes oder durch Chlor, Brom, Alkyl oder Alkoxy mit je 1 bis 3 C-Atomen substituiertes Phenyl bedeutet, und

Y ein Wasserstoffatom bedeutet oder die Bedeutung von X hat, als Härtungsbeschleuniger für die Härtung der Epoxidverbindungs mit Di- oder Polycarbonsäuren, Anhydriden von Di- oder Polycarbonsäuren oder mit mehrwertigen Phenolen, vorzugsweise mittels Polycarbonsäureanhydriden oder mehrwertigen Phenolen, wobei der Anteil an Verbindung der Formel I 0,1 bis 10, vorzugsweise 0,2 bis 2 Gewichtsprozent, bezogen auf das Epoxidharz-Härter-Gemisch, beträgt.

Vorzugsweise enthalten die Gemische eine Verbindung der Formel I, worin m für 3 steht, R Butyl, Phenyl oder Tolyl bedeutet und Y ein Wasserstoffatom bedeutet oder die Bedeutung von X hat.

Die Verbindungen der Formel I, die zum Teil bekannte Verbindungen darstellen, können nach dem im GB-Patent 1,169,990 oder im US-Patent 3,332,997 offenbarten Verfahren hergestellt werden, indem man an 1 Mol eines Amins der Formel II

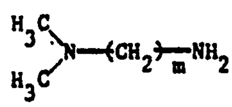

(II)

worin m die gleiche Bedeutung wie in Formel I hat, 1 oder 2 Mole eines Monoglycidyläthers der Formel III

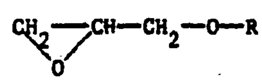

(III)

worin R die gleiche Bedeutung wie in Formel I hat, in der Wärme anlagert.

Die Amine der Formel II und die Monoglycidyläther der Formel III stellen bekannte Verbindungen dar.

Sowohl in der GB-PS 1,169,990 als auch in der US-PS 3,332,997 werden Verbindungen offenbart, die durch Umsetzung eines eine primäre Aminogruppe enthaltenden Amins mit einem Glycidyläther erhalten werden, und somit der oben angegebenen Formel I entsprechen können, wenn Y in der Formel I ein Wasserstoffatom darstellt. Während die aus der GB-PS 1,169,990 bekannten Verbindungen pharmakologisch aktive Substanzen darstellen, werden die in der US-PS 3,332,997 beschriebenen Verbindungen zwar als Härtungsmittel für Epoxidharze verwendet, doch werden sie nur in äquivalenten Mengen eingesetzt, d. h., in den härtbaren Epoxidharzmischungen wird ihr Anteil so bemessen, dass auf 1 Aequivalent Epoxidgruppe 1 Aequivalent Aminwasserstoffatom kommt. Dagegen geht aus der US-PS nicht hervor, dass die Verbindungen der Formel I vorteilhaft in katalytischen Mengen als Härtungsbeschleuniger für die Härtung von Epoxidharzen mittels Polycarbonsäureanhydrid oder mehwertigen Phenolen verwendet werden können.

Verbindungen der Formel I, worin Y die gleiche Bedeutung wie X hat, werden in den oben angegebenen Patentschriften nicht offenbart. Diese Verbindungen zeigen gegenüber den vorbekannten Verbindungen der Formel I den Vorteil, dass sie in Mischung mit Epoxidharzen eine bessere Lagerstabilität aufweisen.

Gegenstand der vorliegenden Erfindung sind somit auch Verbindungen der Formel I, worin m für eine Zahl von 3 bis 10, vorzugsweise 3, steht und X und Y je eine Gruppierung der Formel

$$-CH_2-\underset{OH}{\underset{|}{CH}}-CH_2-O-R$$

bedeuten, worin R ein Alkyl mit 4 bis 10 C-Atomen oder ein unsubstituiertes oder durch Chlor, Brom, Alkyl oder Alkoxy mit je 1 bis 3 C-Atomen substituiertes Phenyl, vorzugsweise je ein Butyl, Phenyl oder Tolyl, bedeutet.

Die erfindungsgemässen Verbindungen eignen sich als Härtungsbeschleuniger für die Härtung von Epoxidharzen mit Di- oder Polycarbonsäuren, Anhydriden der Di- oder Polycarbonsäuren oder mit mehrwertigen Phenolen.

Als Epoxidharze, zu deren Härtung die Verbindungen der Formel I Härtungsbeschleuniger eingesetzt werden können, eignen sich alle bekannten Klassen von Epoxidharzen. Vor allem kommen Epoxidverbindungen mit durchschnittlich mehr als einer an ein Heteroatom (z. B. Schwefel, vorzugsweise Sauerstoff oder Stickstoff) gebundenen Glycidylgruppe, β-Methylglycidylgruppe oder 2,3-Epoxycyclopentylgruppe in Frage ; genannt seien insbesondere Bis-(2,3-epoxycyclopentyl)-äther ; Di- bzw. Polyglycidyläther von mehrwertigen aliphatischen Alkoholen, wie 1,4-Butandiol, oder Polyalkylenglykolen, wie Polypropylenglykole ; Di- oder Polyglycidyläther von cycloaliphatischen Polyolen, wie 2,2-Bis-(4-hydrocyclohexyl)-propan ; Di- bzw. Polyglycidyläther von mehrwertigen Phenolen, wie Resorcin, Bis-(p-hydroxyphenyl)methan, 2,2-Bis-(p-hydroxyphenyl)-propan (= Diomethan), 2,2-Bis-(4′-hydroxy-3′,5′-dibromphenyl)propan, 1,2,2,2-Tetrakis-(p-hydroxyphenyl)-äthan, oder von unter sauren Bedingungen erhaltenen Kondensationsprodukten von Phenolen mit Formaldehyd, wie Phenol-Novolake und Kresol-Novolake ; Di- bzw. Poly-(β-methylglycidyl) äther der oben angeführten mehrwertigen Alkohole oder mehrwertigen Phenole ; Polyglycidylester von mehrwertigen Carbonsäuren, wie Phthalsäure, Terephthalsäure, $\Delta^4$-Tetrahydrophthalsäure und Hexahydrophthalsäure ; N-Glycidylderivate von Aminen, Amiden und heterocyclischen Stickstoffbasen, wie N,N-Diglycidylanilin, N,N-Diglycidyltoluidin, N,N,N′,N′-Tetraglycidyl-bis(p-aminophenyl)-methan ; Triglycidylisocyanurat ; N,N′-Diglycidyläthylenharnstoff ; N,N′-Diglycidyl-5,5-dimethylhydantoin, N,N′-Diglycidyl-5-isopropylhydantoin ; N,N′-Diglycidyl-5,5-dimethyl-6-isopropyl-5,6-dihydantoin ; N,N′-Diglycidyl-5,5-dimethyl-6-isopropyl-5,6-dihydro-uracil.

Geeignete Epoxidverbindungen sind ferner alicyclische Diepoxide, wie Limonendioxyd, Dicyclopentadiendioxyd, Aethylenglykol-bis-(3,4-epoxytetrahydrodicyclopentadien-8-yl)-glycidyläther, sowie Verbindungen mit zwei Epoxycyclohexylresten, wie Diäthylenglykol-bis-(3,4-epoxycyclohexancarboxylat), Bis-3,4-(epoxycyclohexylmethyl)-succinat, 3′,4′-Epoxy-6′-methylcyclohexylmethyl-3,4-epoxy-6-methyl-cyclohexan-carboxylat und 3′,4′-Epoxyhexanhydrobenzal-3,4-epoxycyclohexan-1,1-dimethanol.

Als Di- und Polycarbonsäuren, die zusammen mit den erfindungsgemäss zu verwendenten Härtungsbeschleunigern zum Härten von Epoxidharzen eingesetzt werden können, seien beispielsweise genannt : Phthalsäure, Isophthalsäure, Terephthalsäure, 2,5-Dimethylterephthalsäure, Naphthalin-2,6-dicarbonsäure, Naphthalin-1,8-dicarbonsäure, Naphthalin-2,3-dicarbonsäure, Diphenyläther-4,4′-dicarbonsäure, Diphenyl-4,4′-dicarbonsäure, Benzoltricarbonsäuren, wie Trimesinsäure, Trimellitsäure oder Hemimellitsäure, Benzoltetracarbonsäuren, wie Benzol-1,2,3,4-tetracarbonsäure, Benzol-1,2,3,5-tetracarbonsäure oder Pyromellitsäure, Benzophenon-3,3′,4,4′-tetracarbonsäure, Naphthalintetracarbonsäure, Perylentetracarbonsäure oder Tetracarbonsäuren der Formel

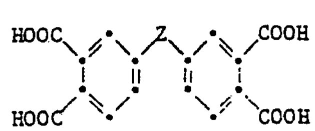

worin Z für einen Carbonyl-, Sulfonyl-, Methylenrest oder ein Aethersauerstoffatom steht, wie z. B. Benzophenontetracarbonsäure.

Als geeignete aliphatische Dicarbonsäure seien beispielsweise genannt : Malonsäure Bernsteinsäure, Adipinsäure, 2,2,4-Trimethyladipinsäure und 2,4,4-Trimethyladipinsäure sowie deren beide Isomeren enthaltenden Gemische, Sebazinsäure, Fumarsäure und Maleinsäure, und als geeignete cycloaliphatische Dicarbonsäuren seien beispielsweise genannt : Tetrahydrophthalsäure, Methyl-tetrahydrophthalsäure, isomerisierte 4-Methyl-tetrahydrophthalsäure, Endomethylen-tetrahydrophthalsäure, Hexahydrophthalsäure, Methylhexahydrophthalsäure, Endomethylenhexahydrophthalsäure, Hexahydroterephthalsäure und Hexahydroisophthalsäure.

Ferner sind z. B. auch die durch Umsetzung von 2 Mol Trimellitsäureanhydrid mit 1 Mol eines Glykols erhältlichen Tetracarbonsäuren der Formel

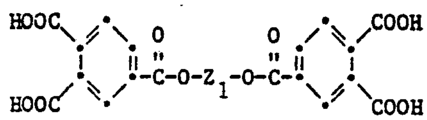

geeignet, worin $Z_1$ den divalenten Rest eines unsubstituierten oder substituierten Glykols darstellt, oder Polyesterpolycarbonsäuren, die durch Umsetzung von 3 Mol eines Carbonsäureanhydrids mit 1 Mol eines Triols erhältlich sind.

Als Dicarbonsäuren können beispielsweise auch die Di- oder Polyesterdicarbonsäuren aus aliphatischen Diolen und aliphatischen oder cycloaliphatischen Dicarbonsäuren verwendet werden. Solche Esterdicarbonsäuren sind ebenfalls bekannt und können z. B. nach dem im GB-Patent 1,164,584 offenbarten Verfahren hergestellt werden, indem man n Mol eines aliphatischen Diols, wobei n eine Zahl von 1 bis 50 bedeutet, mit n + 1 Molen einer aliphatischen oder cycloaliphatischen Dicarbonsäure, gegebenenfalls in Gegenwart eines Katalysators, polykondensiert.

Als geeignete Polycarbonsäureanhydride, die zusammen mit den erfindungsgemäss zu verwendenten Härtungsbeschleunigern zum Härten von Epoxidharzen eingesetzt werden können, seien beispielsweise genannt : cycloaliphatische Polycarbonsäureanhydride, wie Tetrahydrophthalsäureanhydrid, Methyltetrahydrophthalsäureanhydrid, Hexahydrophthalsäureanhydrid, Methylenhexahydrophthalsäureanhydrid, Endomethylentetrahydrophthalsäureanhydrid, Methyl-endomethylen-tetrahydrophthalsäureanhydrid (= Methylnadicanhydrid), das Diels-Alder-Addukt aus 2 Mol Maleinsäureanhydrid und 1 Mol 1,4-Bis-(cyclopentadienyl)-2-buten, die eutektischen Gemische dieser Polycarbonsäureanhydride sowie Isomerengemische der methylsubstituierten Tetrahydrophthalsäureanhydride, oder gewisse aromatische Polycarbonsäureanhydride, wie Trimellitsäureanhydrid oder Pyromellitsäureanhydrid.

Als geeignete mehrwertige Phenole, die zusammen mit den Verbindungen der Formel I zum Härten von Epoxidharzen verwendet werden können, seien beispielsweise genannt : Resorcin, Hydrochinon, 2-Aethylhydrochinon, 2-Methylhydrochinon, 2,6-Diäthylhydrochinon, Brenzcatechin, 3-Methylbrenzcatechin, 4-Aethylbrenzcatechin, 2,6-Dihydroxytoluol, Dihydroxynaphthaline und insbesondere die Bisphenole, wie Bisphenol A und Bisphenol F.

Bei den erfindungsgemäss verwendeten Härtungskatalysatoren bzw. -beschleunigern handelt es sich um flüssige bis viskose Substanzen, die schwerflüchtig sind und auch bei Verarbeitung der erfindungsgemässen Gemische nur wenig verdampfen, so dass hierbei kaum Geruchsbelästigungen auftreten. Infolge des niedrigen Dampfdruckes der erfindungsgemäss verwendeten Härtungskatalysatoren bzw. -beschleuniger lassen sich mangelhafte Aushärtungen z. B. an der Oberfläche von Formstoffen durch Verdunsten des Härtungskatalysator, oder Blasenbildung beim Härtungsvorgang vermeiden. Die aus den erfindungsgemässen Mischungen hergestellten Formstoffe zeigen ausserdem eine gute Beständigkeit gegenüber Feuchtigkeit.

Die erfindungsgemässen härtbaren Epoxidharzmischungen finden ihren Einsatz vor allem auf den Gebieten des Oberflächenschutzes, der Elektrotechnik, der Laminierverfahren, der Klebstofftechnik und im Bauwesen. Sie können in jeweils dem speziellen Anwendungszweck angepasster Formulierung, im ungefüllten oder gefüllten Zustand, gegebenenfalls in Form von Lösungen oder Emulsionen, als Anstrichmittel, Lacke, Pressmassen, Spritzgussformulierungen, Tauchharze, Giessharze, Imprägnierharze, Bindemittel, als Werkzeugharze, Laminierharze, Dichtungs- und Spachtelmassen, Bodenbelagsmassen und Bindemittel für mineralische Aggregate verwendet werden.

Bevorzugt werden die erfindungsgemässen Gemische als Laminierharze und insbesondere als Klebharze eingesetzt.

In den folgenden Beispielen stehen Teile für Gewichtsteile ; Prozente bedeuten, falls nicht näher angegeben, Gewichtsprozente.

Herstellung der Aminaddukte

Beispiel A

51,0 g (0,5 Mol) Dimethylaminopropylamin werden im Sulfierkolben vorgelegt und unter Stickstoffatmosphäre auf 120 °C erwärmt. Innerhalb von 60 Minuten werden ohne weitere Wärmezufuhr unter Rühren 150 g (1,0 Mol) technisch hergestellter Butylglycidyläther mit einem Epoxidgehalt von 6,67 Aequivalenten/Kg (Theorie : 7,69 Aequivalenten/kg) zugetropft, wobei die Temperatur der Reaktionsmischung infolge exothermer Reaktion auf 130 °C ansteigt. Das Reaktionsprodukt wird anschliessend noch 2 Stunden bei 120 °C gehalten. Nach dem Abkühlen erhält man eine niederviskose, schwach gelbe, klare Flüssigkeit. Die erhaltene Flüssigkeit besteht aus dem Additonsprodukt aus 1 Mol Dimethylaminopropylamin und 2 Mol technisch hergestelltem Butylglycidyläther und entspricht der Verbindung folgender theoretischer Struktur

$$(CH_3)_2N-(CH_2)_3N-(CH_2-\underset{OH}{CH}-CH_2-O-CH_2-CH_2-CH_2-CH_3)_2,$$

was durch die Elementaranalyse bestätigt wird :

| berechnet : | gefunden : |
|---|---|
| C = 63,0 % | C = 61,7 % |
| H = 11,6 % | H = 11,6 % |
| O = 17,7 % | O = 18,5 % |
| N = 7,7 % | N = 6,8 % |
| | Cl = 1,2 % |

## Beispiel B

51,0 g (0,5 Mol) Dimethylaminopropylamin werden im Sulfierkolben vorgelegt und unter Stickstoffatmosphäre auf 120 °C erwärmt. Innerhalb von 55 Minuten werden ohne weitere Wärmezufuhr 75,0 g (0,5 Mol) Butylglycidyläther wie im Beispiel 1 unter Rühren zugetropft, wobei die Temperatur der Reaktionsmischung infolge exothermer Reaktion auf 126 °C ansteigt. Das Reaktionsprodukt wird nach Beendigung des Zutropfens noch 60 Minuten bei 130 °C gehalten. Nach dem Abkühlen erhält man eine niederviskose, schwach gelbe, klare Flüssigkeit. Die erhaltene Flüssigkeit besteht aus dem Additionsprodukt aus 1 Mol Dimethylaminopropylamin und 1 Mol Butylglycidyläther und entspricht folgender theoretischer Strukturformel

$$(CH_3)_2N-(CH_2)_3NH-CH_2-\underset{OH}{CH}-CH_2-O-CH_2-CH_2-CH_2-CH_3,$$

was durch die Elementaranalyse bestätigt wird :

| berechnet : | gefunden : |
|---|---|
| C = 62,0 % | C = 61,5 % |
| H = 12,1 % | H = 12,2 % |
| O = 12,1 % (13,7)*) | O = 15,0 % |
| N = 13,8 % (12,2)*) | N = 10,8 % |

*) unter Berücksichtigung der Verunreinigung im verwendeten technischen Butylglycidyläther ergeben sich die in Klammern angegebenen korrigierten theoretischen Werte für O und N.

## Beispiel C

51,0 g (0,5 Mol) Dimethylaminopropylamin werden im Sulfierkolben vorgelegt und unter Stickstoffatmosphäre auf 120 °C erwärmt. Innerhalb von 53 Minuten werden ohne weitere Wärmezufuhr 181 g (1,0 Mol) technisch hergestellter Kresylglycidyläther mit einem Epoxidgehalt von 5,52 Aequivalenten/kg unter Rühren zugetropft, wobei die Temperatur der Reaktionsmischung infolge exothermer Reaktion auf 126 °C ansteigt. Das Reaktionsprodukt wird nach Beendigung des Zutropfens während 60 Minuten bei 120 °C gehalten. Das erhaltene Produkt ist bei Raumtemperatur eine mittelviskose, schwach gelbe, klare Flüssigkeit.

Das Additionsprodukt setzt sich aus Dimethylaminopropylamin und Kresylglycidyläther im Molverhältnis von 1 : 1 zusammen und entspricht der Verbindung folgender Strukturformel

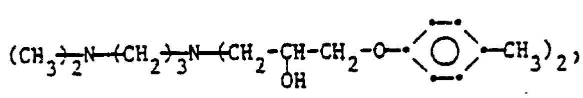

was durch die Elementaranalyse bestätigt wird :

| berechnet : | gefunden : |
|---|---|
| C = 69,8 % | C = 69,8 % |
| H = 8,8 % | H = 8,9 % |
| O = 14,9 % (15,4)[xx] | O = 15,2 % |
| N = 6,5 % ( 5,9)[xx] | N = 6,0 % |

## Beispiel D

51,0 g (0,5 Mol) Dimethylaminopropylamin werden im Sulfierkolben vorgelegt und unter Stickstoffatmosphäre auf 120 °C erwärmt. Innerhalb von 16 Minuten werden ohne weitere Wärmezufuhr unter Rühren 90,5 g (0,5 Mol) Kresylglycidyläther wie im Beispiel C zugetropft, wobei die Temperatur der Reaktionsmischung infolge exothermer Reaktion auf 171 °C ansteigt. Das Reaktionsprodukt wird anschliessend noch 30 Minuten bei 120 °C gehalten. Nach dem Abkühlen erhält man eine niederviskose, schwach gelbe Flüssigkeit.

Das Additionsprodukt setzt sich aus Dimethylaminopropylamin und Kresylglycidyläther im Molverhältnis von 1 : 1 zusammen und entspricht der Verbindung folgender Strukturformel

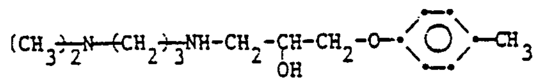 ,

was durch die Elementaranalyse bestätigt wird :

| berechnet : | gefunden : |
|---|---|
| C = 67,6 % | C = 67,3 % |
| H = 9,8 % | H = 9,6 % |
| O = 12,0 % (13,0)**) | O = 13,0 % |
| N = 10,5 % ( 9,4**) | N = 9,4 % |

**) unter Berücksichtigung der Verunreinigung im verwendeten technischen Kresylglycidyläther ergeben sich in Klammern angegebenen korrigierten theoretischen Werte für O und N.

## Beispiel E

20,4 g (0,2 Mol) Dimethylaminopropylamin werden im Sulfierkolben vorgelegt und unter Stickstoffatmosphäre auf 95 °C erwärmt. Innerhalb von 17 Minuten ohne weitere Wärmezufuhr ein Gemisch aus 30 g (0,2 Mol) technisch hergestelltem Butylglycidyläther und 36,2 g (0,2 Mol) technisch hergestelltem Kresylglycidyläther zugetropft, wobei die Temperatur der Reaktionsmischung infolge exothermer Reaktion auf 124 °C ansteigt. Das Reaktionsprodukt wird anschliessend noch 30 Minuten bei 140 °C gehalten. Nach dem Abkühlen erhält man eine niederviskose, schwach gelbe Flüssigkeit.

Das Additionsprodukt setzt sich aus Dimethylaminopropylamin, Butylglycidyläther und Kresylglycidyläther im Molverhältnis von 1 : 1 : 1 zusammen und entspricht der durchschnittlichen Strukturformel :

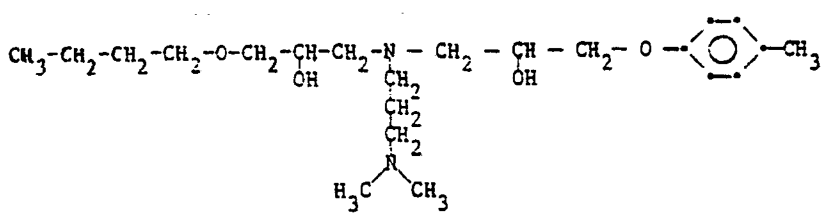

| Untersuchte Produkte | Dampfdruck (Pa) bei 20 °C | 50 °C | 100 °C |
|---|---|---|---|
| $(CH_3)_2-N-(CH_2)_3-NH_2$ | $1,0 \times 10^{2}$ | $1,2 \times 10^{3}$ | $3,3 \times 10^{4}$ |
| $(CH_3)_2-N-(CH_2)_3-NH-(CH_2)_3-NH_2$ | $8,0 \times 10^{-1}$ | $1,2 \times 10^{1}$ | $4,0 \times 10^{2}$ |
| $(CH_3)_2-N-(CH_2)_3-NH-(CH_2)_2-CN$ | $9,3 \times 10^{-1}$ | $1,3 \times 10^{1}$ | $4,7 \times 10^{2}$ |
| 1-Methylimidazol | $2,7 \times 10^{1}$ | $2,0 \times 10^{2}$ | $2,7 \times 10^{3}$ |
| Benzyldimethylamin | $2,7 \times 10^{2}$ | $1,3 \times 10^{3}$ | $8,0 \times 10^{3}$ |
| Verbindung gemäss Beispiel A | $3,5 \times 10^{-2}$ | $1,9 \times 10^{-1}$ | 2,0 |
| Verbindung gemäss Beispiel B | $1,3 \times 10^{-1}$ | $8,0 \times 10^{-1}$ | 7,3 |
| Verbindung gemäss Beispiel C | $6,1 \times 10^{-3}$ | $4,0 \times 10^{-2}$ | $4,5 \times 10^{-1}$ |
| Verbindung gemäss Beispiel D | $4,8 \times 10^{-2}$ | $3,1 \times 10^{-1}$ | 3,7 |
| Verbindung gemäss Beispiel E | $2,3 \times 10^{-2}$ | $1,1 \times 10^{-1}$ | 2,0 |

## Beispiel F

20,4 g (0,2 Mol) Dimethylaminopropylamin werden im Sulfierkolben vorgelegt und unter Stickstoffatmosphäre auf 100 °C erwärmt. Innerhalb von 30 Minuten werden, unter schwacher Wärmezufuhr, 38, 2 g (0,2 Mol) 2-Aethylhexylglycidyläther (Isooctylglycidyläther) mit einem Epoxidgehalt von 5,23 Aequivalenten/kg, unter Rühren zugetropft. Das Reaktionsprodukt wird nach Beendigung des Zutropfens während 30 Minuten bei 120 °C gehalten. Das erhaltene Produkt ist bei Raumtemperatur eine niederviskose, helle, schwach trübe Flüssigkeit. Das Additionsprodukt setzt sich aus Dimethylaminopropylamin und 2-Aethylhexylglycidyläther im Molverhältnis von 1 : 1 zusammen und entspricht der Verbindung folgender Strukturformel :

$$(CH_3)_2N(CH_2)_3NH-CH_2-\underset{OH}{CH}-CH_2O-CH_2-CH_2-CH_2-CH_2(CH_2CH_3)_2$$

## Beispiel G

20,4 g (0,2 Mol) Dimethylaminopropylamin werden im Sulfierkolben vorgelegt und unter Stickstoffatmosphäre auf 100 °C erwärmt. Innerhalb von 37 Minuten werden 75,5 g (0,2 Mol) Dibromkresylglycidyläther mit einem Epoxidgehalt von 2,65 Aequivalenten/kg (Theorie : 3, 11 Aequivalente/kg) unter Rühren zugetropft. Das Reaktionsprodukt wird nach Beendigung des Zutropfens während 30 Minuten bei 120 °C gehalten. Das erhaltene Produkt ist bei Raumtemperatur eine zähe, dunkelgelbe Masse. Das Additionsprodukt setzt sich aus Dimethylaminopropylamin und Dibromkresylglycidyläther im Molverhältnis von 1 : 1 zusammen und entspricht folgender Strukturformel :

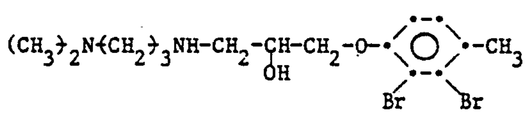

was, unter Berücksichtigung der Verunreinigung im verwendeten Kresylglycidyläther, durch die Elementaranalyse bestätigt wird :

| berechnet : | gefunden : |
|---|---|
| C = 42,5 % | C = 41,4 % |
| H = 5,7 % | H = 5,4 % |
| O = 7,6 % | O = 5,4 % |
| N = 6,6 % | N = 8,4 % |
| Br = 37,7 % | Br = 39,4 % |

## Beispiel 1

187 g (1,0 Aequivalent) eines Bisphenol-A-diglycidyläthers mit einem Epoxidgehalt von 5,3 Aequivalenten/kg, 154 g (1,0 Aequivalent Anhydridgruppe) Hexahydrophthalsäureanhydrid und 1,8 g (0,5 Gew.-%) des im Beispiel A hergestellten Aminadduktes werden bei 80 °C gemischt und anschliessend im Vakuumschrank kurz bei 2 kPa von eingerührter Luft und Feuchtigkeit befreit. Das Harz wird in eine auf 100 °C vorgewärmte Form aus Anticorodal (Aluminiumlegierung) gegossen und während 4 Stunden bei 100 °C und 12 Stunden bei 160 °C gehärtet. An der erhaltenen Formstoffplatte werden folgende Eigenschaften gemessen :

| | |
|---|---|
| Biegefestigkeit (gemäss VSM 77103) = | 135 N/mm² |
| Biegefestigkeit (gemäss VSM 77103) nach 60 Tagen Kochwasserlagerung = | 52 N/mm² |
| Durchbiegung (gemäss VSM 77103) = | 9 mm |
| Durchbiegung (gemäss VSM 77103) nach 60 Tagen Kochwasserlagerung = | 2 mm |
| Wasseraufnahme nach 4 Tagen bei 23 °C = | 0,15 Gew.-% |
| Kochwasseraufnahme nach 60 Tagen bei 100 °C = | 2,2 Gew.-% |
| Glasumwandlungstemperatur (TMS*), 10 °C/min = | 135 °C |

*) TMS = Thermomechanical Scanning Calorimeter (Perkin Elmer).

## Vergleich I

187 g (1,0 Aequivalent) des Bisphenol-A-diglycidyläthers entsprechend Beispiel 1,154 g (1,0 Aequivalent) Hexahydrophthalsäureanhydrid und 1,8 g (0,5 Gew.-%) 1-Methylimidazol werden entsprechend Beispiel 1 verarbeitet, gehärtet und geprüft.

| | |
|---|---|
| Biegefestigkeit (gemäss VSM 77103) = | 133 N/mm² |
| Biegefestigkeit (gemäss VSM 77103) nach 60 Tagen Kochwasserlagerung = | 18 N/mm² |
| Durchbiegung (gemäss VSM 77103) = | 11 mm |
| Durchbiegung (gemäss VSM 77103) nach 60 Tagen Kochwasserlagerung = | 1 mm |
| Wasseraufnahme nach 4 Tagen bei 23 °C = | 0,20 Gew.-% |
| Kochwasseraufnahme nach 60 Tagen bei 100 °C = | 2,6 Gew.-% |
| Glasumwandlungstemperatur (TMS, 10 °C/min) = | 138 °C |

Aus dem Vergleich geht hervor, dass bei Verwendung von 1-Methylimidazol als Härtungsbeschleuniger für die Anhydridhärtung die erhaltenen Formstoffe bezüglich Wasseraufnahme ein deutlich ungünstigeres Verhalten zeigen.

## Beispiel 2

175 g (1,0 Aequivalent) eines Novolak-glycidyläthers mit einem Epoxidgehalt von 5,7 Epoxidäquivalenten/kg, 55,8 g (0,9 Aequivalent) 2,6-Dihydroxytoluol und 1,2 g des im Beispiel A hergestellten Aminadduktes werden bei 110-120 °C gemischt. Die Mischung wird im Vakuumschrank bei etwa 2 kPa kurz von eingerührter Luft und Feuchtigkeit befreit. Die Reaktionsmischung wird in eine vorgewärmte Form aus Anticorodal gegossen und während 16 Stunden bei 160 °C gehärtet. An den gehärteten Formstoffplatten werden folgende Eigenschaften gemessen :

| | |
|---|---|
| Biegefestigkeit (gemäss VSM 77103) = | 138 N/mm² |
| Biegefestigkeit (gemäss VSM 77103) nach 5 Tagen Wasserlagerung bei 140 °C = | 106 N/mm² |
| Biegefestigkeit (gemäss VSM 77103) nach 17 Tagen Wasserlagerung bei 140 °C = | 98 N/mm² |
| Durchbiegung (nach VSM 77103) = | > 20 mm |
| Durchbiegung (nach VSM 77103) nach 5 Tagen Wasserlagerung bei 140 °C = | 6,5 mm |
| Durchbiegung (nach VSM 77103) nach 17 Tagen Wasserlagerung bei 140 °C = | 4,6 mm |
| Schlagbiegefestigkeit (VSM 77105) = | 83 N mm/mm² |
| Schlagbiegefestigkeit (VSM 77105) nach 5 Tagen Wasserlagerung bei 140 °C = | 32 N mm/mm² |
| Schagbiegefestigkeit (VSM 77105) nach 17 Tagen Wasserlagerung bei 140 °C = | 15 N mm/mm² |
| Wasseraufnahme bei 140 °C nach 5 Tagen = | 4,3 Gew.-% |
| Wasseraufnahme bei 140 °C nach 17 Tagen = | 4,2 Gew.-% |

## Vergleich II

175 g (1,0 Aequivalent) Novolak-glycidyläther entsprechend Beispiel 2, 55,8 g (0,9 Aequivalent) 2,6-Dihydroxytoluol und 0,23 g Benzyldimethylamin werden bei 110-120 °C gemischt. Diese Mischung wird entsprechend Beispiel 2 verarbeitet, gehärtet und geprüft.

| | |
|---|---|
| Biegefestigkeit (nach VSM 77103) = | 140 N/mm² |
| Biegefestigkeit (nach VSM 77103) nach 5 Tagen Wassserlagerung bei 140 °C = | 107 N/mm² |
| Biegefestigkeit (nach VSM 77103) nach 17 Tagen Wasserlagerung bei 140 °C = | 31 N/mm² |
| Durchbiegung (nach VSM 77103) = | 18,3 mm |
| Durchbiegung (nach VSM 77103) nach 5 Tagen Wasserlagerung bei 140 °C = | 5,1 mm |
| Durchbiegung (nach VSM 77103) nach 17 Tagen Wasserlagerung bei 140 °C = | 2,0 mm |
| Schlagbiegefestigkeit (VSM 77105) = | 62 N mm/mm² |
| Schlagbiegefestigkeit (VSM 77105) nach 5 Tagen Wasserlagerung bei 140 °C = | 10 N mm/mm² |
| Schlagbiegefestigkeit (VSM 77105) nach 17 Tagen Wasserlagerung bei 140 °C = | 3 N mm/mm² |
| Wasseraufnahme bei 140 °C nach 5 Tagen = | 4,6 Gew.-% |
| Wasseraufnahme bei 140 °C nach 17 Tagen = | 4,9 Gew.-% |

Der Vergleich zeigt, dass bei der erfindungsgemässen Verwendung der Aminaddukte als Härtungsbeschleuniger für die Phenol-Härtung Formstoffe mit besseren Verhalten gegenüber Wasseraufnahme erhalten werden.

## Beispiel 3

187 g (1,0 Aequivalent) eines Bisphenol-A-diglycidyläthers mit einem Epoxidgehalt von 5,3 Aequivalenten/kg, 154 g (1,0 Aequivalent Anhydridgruppe) Hexahydrophthalsäureanhydrid und 1,8 g (0,5 Gew.-%) des im Beispiel F hergestellten Aminadduktes werden bei 80 °C gemischt und anschliessend im Vakuumschrank kurz bei 2 kPa von eingerührter Luft und Feuchtigkeit befreit. Das Harz wird in eine auf 100 °C vorgewärmte Form aus Anticorodal (Aluminiumlegierung) gegossen und während 4 Stunden bei 100 °C und 12 Stunden bei 160 °C gehärtet. An der erhaltenen Formstoffplatte werden folgende Eigenschaften gemessen :

| | |
|---|---|
| Biegefestigkeit (gemäss VSM 77103) = | 136 N/mm² |
| Biegefestigkeit nach 60 Tagen Kochwasserlagerung = | 146 N/mm² |
| Durchbiegung (gemäss VSM 77103) = | 7,9 mm |
| Durchbiegung nach 60 Tagen Kochwasserlagerung = | 7,4 mm |
| Wasseraufnahme nach 4 Tagen bei 23 °C = | 0,20 Gew.-% |
| Kochwasseraufnahme nach 60 Tagen bei 100 °C = | 1,29 Gew.-% |
| Glasumwandlungstemperatur (TMS, 10 °C/min) = | 144 °C |

Beispiel 4

a) Herstellung der Polyesterdicarbonsäure I

32,9 kg (225 Mol) Adipinsäure, 26,06 kg (218,57 Mol und 1 % Ueberschuss) 1,6-Hexandiol (entsprechend einem Molverhältnis von 35 : 34), 236 g (0,4 Gew.-%) des in Beispiel D hergestellten Katalysators und 177 g (0,3 Gew.-%) 3,5-Di-tert-butylbenzylphosphonsäure-di-n-octadecylester als Katalysator werden unter Stickstoffatmosphäre auf 165 °C erwärmt, wobei innerhalb von 8 Stunden 6,75 kg (86 % der Theorie) Wasser laufend abdestilliert. Anschliessend wird bei 173 °C unter $2 \times 10^3$ Pa die restliche Kondensation durchgeführt. Der erhaltene Polyester ist kristallin mit einem Schmelzpunkt von 65 °C und einem Säureäquivalentgewicht von 3 060 (Theorie : 3951).

b) Herstellung von Formstoffen

10,0 kg (3,27 Aequivalente) Polyesterdicarbonsäure I und 624 g (3,27 Aequivalenten) eines Epoxidnovolakes mit einem Epoxidgehalt von 5,24 Aequivalenten/kg werden bei 100 °C gemischt und in Aluminiumformen mit folgenden Dimensionen vergossen :
400 × 500 × 50 mm und 145 × 145 × 1 mm.

Nach Härtung während 6 Stunden bei 130 °C werden Formkörper erhalten, die bei Raumtemperatur kristallin, oberhalb 60 °C gummielastisch sind.

| | |
|---|---|
| Zugfestigkeit nach DIN 53455 = | 15,6 N/mm² |
| Bruchdehnung nach DIN 53455 = | 206 % |
| Kristallisationsumwandlungstemperatur (DSC-2, 10 °C/Minuten) = | 55 °C |

Das Beispiel zeigt, dass der erfindungsgemäss verwendete Katalysator auch zur Herstellung von Polyesterdicarbonsäuren (Polykondensationsreaktion) geeignet ist und nachträglich noch für die Härtung des Epoxidharzes (Polyadditionsreaktion) wirksam ist.

**Ansprüche**

1. Härtbare Gemische, enthaltend eine Polyepoxidverbindung mit durchschnittlich mehr als einer Epoxidgruppe im Molekül, und eine Dioder Polycarbonsäure, ein Anhydrid einer Di- oder Polycarbonsäure oder ein mehrwertiges Phenol als Härtungsmittel, dadurch gekennzeichnet, dass sie ausserdem eine Verbindung der Formel I

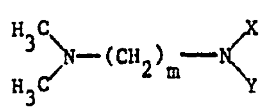 (I)

worin
m für eine Zahl von 3 bis 10 steht,
X eine Gruppierung der Formel

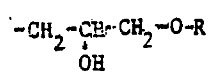

bedeutet, worin
R ein Alkyl mit 4 bis 10 C-Atomen oder ein unsubstituiertes oder durch Chlor, Brom, Alkyl oder Alkoxy mit je 1 bis 3 C-Atomen substituiertes Phenyl bedeutet, und
Y ein Wasserstoffatom bedeutet oder die Bedeutung von X hat, als Härtungsbeschleuniger für die Härtung der Epoxidverbindung mit Di- oder Polycarbonsäuren, Anhydriden von Di- oder Polycarbonsäuren oder mit mehrwertigen Phenolen enthalten, wobei der Anteil an der Verbindung der Formel I 0,1 bis 10 Gewichtsprozent, bezogen auf das Epoxidharz-Härter-Gemisch, beträgt.

2. Gemische gemäss Anspruch 1, enthaltend eine Verbindung der Formel I, worin m für 3 steht, R Butyl, Phenyl oder Tolyl bedeutet und Y ein Wasserstoffatom bedeutet oder die Bedeutung von X hat.

3. Gemische gemäss Anspruch 1, enthaltend eine Verbindung der Formel I, worin m für 3 steht, R Isooctyl bedeutet und Y ein Wasserstoffatom bedeutet.

4. Gemische gemäss Anspruch 1, dadurch gekennzeichnet, dass der Anteil an der Verbindung der Formel I 0,2 bis 2 Gewichts-% beträgt.

5. Verbindungen der Formel I gemäss Anspruch 1, worin m eine Zahl von 3 bis 10 bedeutet, und X und Y je eine Gruppierung der Formel

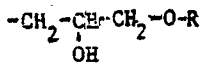

bedeuten, worin R ein Alkyl mit 4 bis 10 C-Atomen oder ein unsubstituiertes oder durch Chlor, Brom, Alkyl oder Alkoxy mit je 1 bis 3 C-Atomen substituiertes Phenyl bedeutet.

6. Verbindungen der Formel I gemäss Anspruch 1, worin m für die Zahl 3 steht und X und Y je eine Gruppierung der Formel

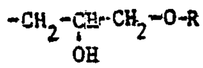

bedeuten, worin R unabhängig voneinander je ein Butyl, Phenyl oder Tolyl bedeutet.

**Claims**

1. Curable mixtures which contain a polyepoxide compound having on average more than one epoxide group in the molecule, and a di- or polycarboxylic acid, an anhydride of a di- or polycarboxylic acid or a polyhydric phenol as curing agent, characterised in that the said mixtures additionally contain a compound of the formula I

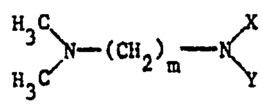
(I)

wherein

m is a number from 3 to 10,

X is a grouping of the formula

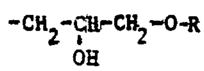

in which

R is an alkyl having 4 to 10 C atoms, or a phenyl which is unsubstituted or substituted by chlorine, bromine or alkyl or alkoxy each having 1 to 3 C atoms, and

Y is a hydrogen atom or has the meaning defined for X, as the curing accelerator for the curing of the epoxide compound with di- or polycarboxylic acids, anhydrides of di- or polycarboxylic acids or with polyhydric phenols, the proportion of the compound of the formula I being 0.1 to 10 per cent by weight, relative to the epoxide resin/curing agent mixture.

2. Mixtures according to claim 1, containing a compound of the formula I in which m is 3, R is butyl, phenyl or tolyl and Y is a hydrogen atom or has the meaning defined for X.

3. Mixtures according to claim 1, containing a compound of the formula I in which m is 3, R is isooctyl and Y is a hydrogen atom.

4. Mixtures according to claim 1, characterised in that the proportion of the compound of the formula I is 0.2 to 2 % by weight.

5. Compounds of the formula I according to claim I, in which m is a number from 3 to 10, and X and Y are each a grouping of the formula

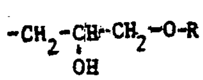

wherein

R is an alkyl having 4 to 10 C atoms, or a phenyl which is unsubstituted or substituted by chlorine, bromine, or alkyl or alkoxy each having 1 to 3 C atoms.

6. Compounds of the formula I according to claim 1, in which m is the number 3, and X and Y are each a grouping of the formula

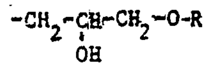

wherein the R's independently of one another are each a butyl, phenyl or tolyl.

**Revendications**

1. Mélanges durcissables contenant un composé polyépoxydique dont la molécule renferme en moyenne plus d'un radical époxy, et, comme durcisseur, un acide di- ou poly-carboxylique, un anhydride d'acide di- ou poly-carboxylique ou un polyphénol, mélanges caractérisés en ce qu'ils contiennent en outre un composé répondant à la formule I

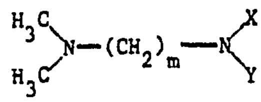 (I)

dans laquelle

m désigne un nombre de 3 à 10,

X représente un radical

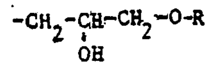

dans lequel

R désigne un radical alkyle contenant de 4 à 10 atomes de carbone ou un radical phényle non substitué ou porteur d'un atome de chlore, d'un atome de brome, d'un alkyle en $C_1$-$C_3$ ou d'un alcoxy en $C_1$-$C_3$ et

Y représente un atome d'hydrogène ou a la signification de X, comme accélérateur de durcissement pour le durcissement du composé époxydique au moyen d'acides di- ou poly-carboxyliques, d'anhydrides d'acides di- ou poly-carboxyliques ou de polyphénols, la proportion du composé de formule I étant comprise entre 0,1 et 10 % en poids par rapport au mélange résine époxydique/durcisseur.

2. Mélanges selon la revendication 1 qui contiennent un composé de formule I dans lequel m est égal à 3, R représente un radical butyle, phényle ou tolyle et Y représente un atome d'hydrogène ou a la signification de X.

3. Mélanges selon la revendication 1 qui contiennent un composé de formule I dans lequel m est égal à 3, R représente un radical iso-octyle et Y représente un atome d'hydrogène.

4. Mélanges selon la revendication 1 caractérisés en ce que la proportion du composé de formule I est comprise entre 0,2 et 2 % en poids.

5. Composés de formule I selon la revendication 1 dans lesquels m est un nombre de 3 à 10, et X et Y représentent chacun un radical

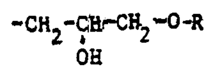

dans lequel

R représente un radical alkyle contenant de 4 à 10 atomes de carbone ou un radical phényle non substitué ou porteur d'un atome de chlore, d'un atome de brome, d'un alkyle en $C_1$-$C_3$ ou d'un alcoxy en $C_1$-$C_3$.

6. Composés de formule I selon la revendication 1 dans lesquels m désigne le nombre 3, et X et Y représentent chacun un radical

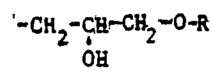

dans lequel

R représente un radical butyle, phényle ou tolyle, le radical R contenu dans X pouvant être différent du radical R contenu dans Y ou identique à ce radical.